# EUROPEAN PATENT APPLICATION

(11) **EP 4 613 955 A1**
(43) Date of publication of application: **10.09.2025**
(21) Application number: 23890878.4
(22) Date of filing: 17.11.2023
(51) Int. Cl.: E04G 21/04, E04G 11/28, E04G 3/18, E04G 3/28

(54) **NUCLEAR ISLAND REACTOR PLANT CONSTRUCTION EQUIPMENT INTEGRATION PLATFORM AND CLIMBING METHOD THEREFOR**

(30) Priority: 18.11.2022 CN 202211445529
(71) Applicant: China Construction Third Engineering Bureau Group Co., Ltd., Wuhan, Hubei 430074 (CN); China Nuclear Power Engineering Co., Ltd., Shenzhen, Guangdong 518120 (CN); China Construction Third Bureau First Engineering Co., Ltd, Wuhan, Hubei 430040 (CN)
(72) Inventor: ZHANG, Kun, Wuhan, Hubei 430074 (CN); WANG, Kaiqiang, Wuhan, Hubei 430074 (CN); WANG, Dong, Shenzhen, Guangdong 518120 (CN); YANG, Yazhang, Shenzhen, Guangdong 518120 (CN); SUN, Qing, Wuhan, Hubei 430074 (CN); ZHAO, Wei, Shenzhen, Guangdong 518120 (CN); LIU, Wei, Wuhan, Hubei 430074 (CN); CHEN, Lihua, Shenzhen, Guangdong 518120 (CN); HUANG, Lei, Wuhan, Hubei 430074 (CN); HUANG, Ge, Shenzhen, Guangdong 518120 (CN); DONG, Xiaogang, Wuhan, Hubei 430040 (CN); CUI, Jian, Wuhan, Hubei 430040 (CN); YAO, Tao, Wuhan, Hubei 430074 (CN); WEI, Wei, Shenzhen, Guangdong 518120 (CN); DING, Zhixin, Shenzhen, Guangdong 518120 (CN); XIONG, Meng, Shenzhen, Guangdong 518120 (CN); LIU, Wenjie, Wuhan, Hubei 430040 (CN); LIU, Yongbo, Wuhan, Hubei 430040 (CN); YE, Zhen, Wuhan, Hubei 430074 (CN); YAN, Zongyu, Wuhan, Hubei 430040 (CN)
(74) Representative: Herrmann, Uwe
(86) International application number: PCT/CN2023/132188
(87) International publication number: WO 2024/104449

(57) **Abstract**

The present invention discloses a nuclear island reactor building construction equipment integration platform and a climbing method therefor. The nuclear island reactor building construction equipment integration platform includes a steel platform system, a support and jacking system, a hanger and formwork system, and construction integration equipment, where the support and jacking system is installed on a side surface of a nuclear island reactor building and located below the steel platform system; the hanger and formwork system is installed below the steel platform system; the steel platform system includes circumferential steel trusses, primary radial steel trusses, and secondary radial steel trusses; and the construction integration equipment includes a circular runway installed at a bottom of the hanger and formwork system and a polar crane slidably connected to the circular runway. The nuclear island reactor building construction equipment integration platform solves the problem of the total construction period being restricted by the "step-by-step" construction process for the inner shell, the outer shell, and the surrounding building in existing nuclear island reactor building construction.

## Description

### TECHNICAL FIELD

The present invention relates to the technical field of nuclear island building construction in nuclear power plants, and in particular, to a nuclear island reactor building construction equipment integration platform and a climbing method therefor.

### BACKGROUND

Currently, the construction formwork system for the inner and outer shells of a nuclear island reactor building mainly employs a curved large formwork system with triangular brackets. However, this type of system poses the following problems:
first: the cantilevered triangular brackets of the inner shell obstruct the construction of the outer shell in vertical space, resulting in a "step-by-step" construction process for the inner shell, outer shell, and surrounding building, thereby extending the total construction period; second: the load-bearing capacity of the triangular brackets is low, forcing construction materials to be placed outside the surrounding building and limiting storage space; third: the formwork must rely on external tower cranes for upward transfer, significantly occupying crane capacity, while material transfers and the installation and positioning of embedded and penetrating members also depend on external tower cranes, leading to low vertical transport efficiency; and fourth: under the current process, additional ground-supported scaffolding and work platforms must be erected for constructing structures such as the Annular Secondary Passive (ASP) water tank, annulus, and prestressing tendons in the reactor building, complicating the construction process, which not only extends the construction period but also significantly increases construction costs.

### SUMMARY

The present invention is mainly intended to provide a nuclear island reactor building construction equipment integration platform and a climbing method therefor to solve the problem of the total construction period being restricted by the "step-by-step" construction process for the inner shell, outer shell, and surrounding building in existing nuclear island reactor building construction.

To achieve the aforementioned purpose, the present invention provides a nuclear island reactor building construction equipment integration platform, including a steel platform system, a support and jacking system, a hanger and formwork system, and construction integration equipment, where
the support and jacking system is installed on a side surface of a nuclear island reactor building and located below the steel platform system to support climbing of the steel platform system; the hanger and formwork system is installed below the steel platform system;
the steel platform system includes circumferential steel trusses, primary radial steel trusses, and secondary radial steel trusses, where two ends of each of the primary radial steel trusses are connected to innermost and outermost ones of the circumferential steel trusses respectively, and the secondary radial steel trusses are disconnected above an outer shell of the nuclear island reactor building to facilitate downward hoisting of construction materials for the outer shell; and
the construction integration equipment includes a telescopic boom crane fixed on the steel platform system, a concrete distributor, an aerial work platform, a circular runway installed at a bottom of the hanger and formwork system, a polar crane slidably connected to the circular runway, and a plurality of top-mounted telescopic downward-extending transport devices connected to the steel platform system.

Preferably, the support and jacking system includes a load-bearing member, a supporting member, a climbing member, a steel column, and a hydraulic assembly, where the load-bearing member is detachably installed on the side surface of the nuclear island reactor building; a top end of the steel column is fixedly connected to the steel platform system, while a bottom end thereof is fixedly connected to the supporting member; and a bottom of the hydraulic assembly is fixed inside the climbing member, while a top thereof is connected to the supporting member to support climbing of the supporting member.

Preferably, the supporting member, the climbing member, and the load-bearing member are detachably connected via hooks or pins.

Preferably, the telescopic boom crane is fixed on the steel platform system, with a mast of the crane fixedly connected to a steel platform.

Preferably, the concrete distributor is fixed on the steel platform system.

Preferably, a circular work track is installed above the steel platform system, and the aerial work platform is height-adjustable and slidably installed on the circular work track.

Preferably, the steel platform system is connected to the plurality of top-mounted telescopic downward-extending transport devices.

Preferably, the nuclear island reactor building construction equipment integration platform further includes construction elevators located on both sides of a buttress column, where the construction elevators each include standard sections thereof detachably installed on the side surface of the nuclear island reactor building and a cage that is installed on and can move vertically relative to the standard sections.

Preferably, the steel platform system includes detachably connected outer and inner cantilever platforms; after disconnecting a linking member between the outer and inner cantilever platforms, the outer cantilever platform is attached to an outer side of the outer shell of the nuclear island reactor building through an outer cantilever platform support point, while the inner cantilever platform is attached to an outer side of an inner shell of the nuclear island reactor building through an inner cantilever platform support point; and a top of the inner cantilever platform is provided with an operation frame and prestressing tensioning equipment.

The present invention further provides a climbing method for the nuclear island reactor building construction equipment integration platform described above, including the following steps:
connecting the climbing member to the load-bearing member while disconnecting the supporting member from the load-bearing member;
driving the supporting member by extending a hydraulic cylinder of the hydraulic assembly to cause the steel column, the steel platform system, the hanger and formwork system, and other auxiliary construction equipment and facilities to climb as a whole;
after the integration platform climbs in place, connecting the supporting member to the load-bearing member at a corresponding position;
disconnecting the climbing member from the load-bearing member and retracting the hydraulic cylinder of the hydraulic assembly to drive the climbing member to climb upward; and
after the climbing member climbs in place, connecting the climbing member to the load-bearing member at a corresponding position.

The nuclear island reactor building construction equipment integration platform provided by the present invention has the following beneficial effects:
1. the integration platform is supported on the walls of the inner and outer shells and achieves multi-level flow construction of the inner and outer shells through multi-level hangers, thereby avoiding interference with existing formwork processes and enabling synchronous construction of the inner and outer shells at the same elevation; in addition, the construction of the surrounding building is decoupled from that of the outer shell, solving the problem of the total construction period being restricted by the "step-by-step" construction process for the inner shell, outer shell, and surrounding building in existing nuclear island reactor building construction;
2. the steel platform system consists of a plurality of radial and circumferential space trusses, offering high overall load-bearing capacity and rigidity to serve as a construction loading platform for the reactor building; meanwhile, heavy-duty equipment such as the cranes, the concrete distributor, and the elevators can be directly arranged on the steel platform and synchronously climb with the platform alongside the formwork, effectively enhancing vertical transport efficiency while eliminating the need for separate jacking and repositioning of large construction equipment; and
3. the steel platform system can be adapted through modifications to accommodate multi-phase construction of the reactor building, reducing the need for additional structural support measures and thereby saving both construction time and costs.

### BRIEF DESCRIPTION OF THE DRAWINGS

FIG. 1 is a schematic sectional view of a nuclear island reactor building construction equipment integration platform according to the present invention;
FIG. 2 is a schematic structural diagram of a steel platform system in a nuclear island reactor building construction equipment integration platform according to the present invention;
FIG. 3 is a schematic structural diagram of a support and jacking system in a nuclear island reactor building construction equipment integration platform according to the present invention;
FIG. 4 is a schematic structural diagram of annulus hoisting equipment in a nuclear island reactor building construction equipment integration platform according to the present invention;
FIG. 5 is a schematic plan view of a crane in a nuclear island reactor building construction equipment integration platform according to the present invention;
FIG. 6 is a schematic elevation view of a crane in a nuclear island reactor building construction equipment integration platform according to the present invention;
FIG. 7 is a schematic structural diagram of a concrete distributor in a nuclear island reactor building construction equipment integration platform according to the present invention;
FIG. 8 is a schematic structural diagram of an aerial work platform in a nuclear island reactor building construction equipment integration platform according to the present invention;
FIG. 9 is a schematic structural diagram of a top-mounted telescopic downward-extending transport device in a nuclear island reactor building construction equipment integration platform according to the present invention;
FIG. 10 is a schematic layout plan of construction elevators in a nuclear island reactor building construction equipment integration platform according to the present invention;
FIG. 11 is a schematic elevation layout of construction elevators in a nuclear island reactor building construction equipment integration platform according to the present invention; and
FIG. 12 is a schematic structural diagram of a nuclear island reactor building construction equipment integration platform after modification according to the present invention.

Reference signs: 1: outer shell; 2: inner shell; 3: steel liner; 4: steel platform system; 4.1: circumferential steel truss; 4.2: primary radial steel truss; 4.3: secondary radial steel truss; 5: support and jacking system; 5.1: load-bearing member; 5.2: supporting member; 5.3: climbing member; 5.4: steel column; 5.5: hydraulic assembly; 6: hanger and formwork system; 7: construction integration equipment; 7.1: circular runway; 7.2: polar crane; 8: crane; 8.1: boom; 8.2: mast; 9: concrete distributor ; 10.1: circular work track; 10.2: aerial work platform; 11: top-mounted telescopic downward-extending transport device; 12: surrounding building; 13: construction elevator; 13.1: standard section of the construction elevator; 13.2: cage; 14: buttress column; 15.1: outer cantilever platform; 15.2: outer cantilever platform support point; 16.1: inner cantilever platform; 16.2: inner cantilever platform support point; and 17: ring beam.

The purpose realization, functional features, and advantages of the present invention will be further described with reference to embodiments and the accompanying drawings.

### DETAILED DESCRIPTION OF THE EMBODIMENTS

It should be understood that the embodiments described herein are only intended to explain rather than limit the present invention.

It should be noted that the orientations or positional relationships indicated by the terms such as "transverse", "longitudinal", "up", "down", "front", "rear", "left", "right", "vertical", "horizontal", "top", "bottom", "inner", and "outer" are based on those shown in the accompanying drawings, and are intended only for the convenience of describing the present invention and for simplifying the description rather than for indicating or implying that the referred devices or elements must be provided with a particular orientation or constructed and operated in a particular orientation; therefore, these terms should not be construed as limiting the present invention. Furthermore, the terms "first", "second", and the like are intended only for descriptive purposes and should not be construed as indicating or implying relative importance.

The present invention provides a nuclear island reactor building construction equipment integration platform.

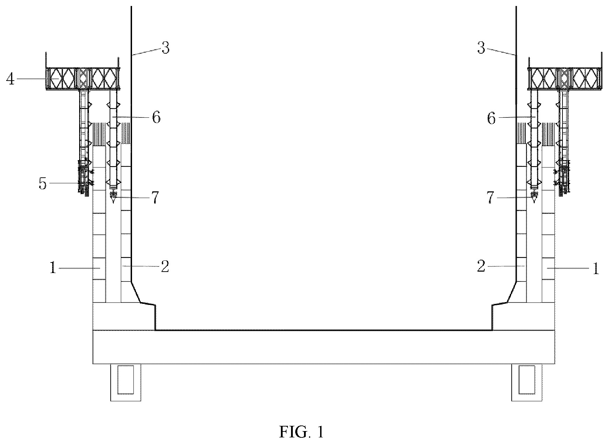

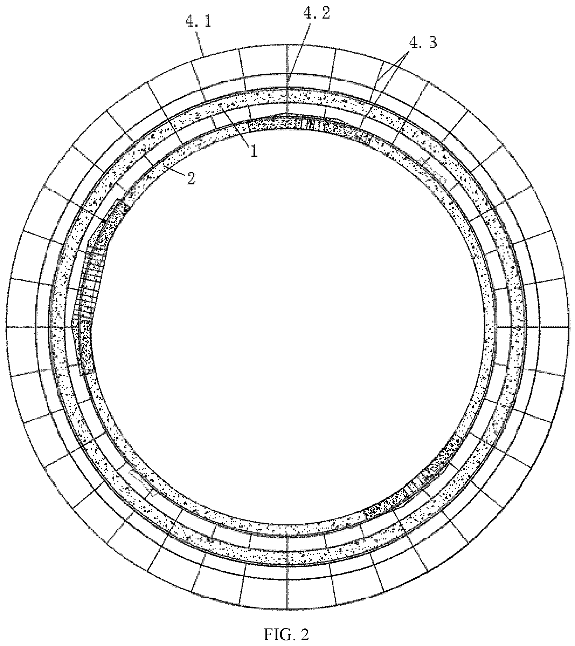

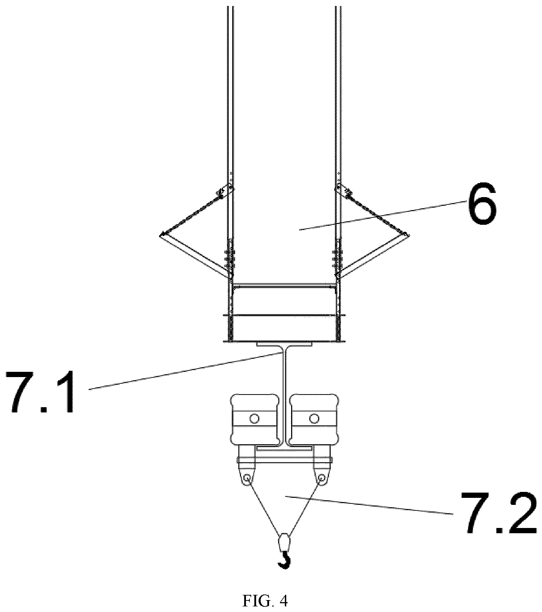

Referring to FIGs. 1-11, in a preferred embodiment, the nuclear island reactor building construction equipment integration platform includes a steel platform system 4 (configured to provide arrangement space for various equipment and facilities), a support and jacking system 5, a hanger and formwork system 6, and construction integration equipment 7, where
the support and jacking system 5 is installed on a side surface of a nuclear island reactor building (optionally attached to an outer side of an inner shell 2, an inner side of an outer shell 1, or an outer side of the outer shell 1) and located below the steel platform system 4 to support climbing of the steel platform system; the hanger and formwork system 6 is installed below the steel platform system 4;
the steel platform system 4 includes circumferential steel trusses 4.1, primary radial steel trusses 4.2, and secondary radial steel trusses 4.3, where two ends of each of the primary radial steel trusses 4.2 are connected to innermost and outermost ones of the circumferential steel trusses 4.1 respectively, and the secondary radial steel trusses 4.3 are disconnected above the outer shell 1 of the nuclear island reactor building to facilitate downward hoisting of construction materials for the outer shell 1; and
the construction integration equipment 7 includes a circular runway 7.1 installed at a bottom of the hanger and formwork system 6 and a plurality of polar cranes 7.2 slidably connected to the circular runway 7.1. The circular runway 7.1 is located between the outer shell 1 and the inner shell 2 of the nuclear island reactor building.

The hanger and formwork system 6 is connected below the steel platform system 4 and arranged on both sides of the outer shell, enabling multi-level simultaneous construction and providing a working platform for various construction activities such as rebar binding, installation of embedded members, formwork erection, and concrete pouring and curing. Inclined ladders are installed inside hangers to facilitate vertical personnel movement between different levels.

The steel platform system 4 has an annular structure in plane and is arranged above the outer and inner shells 1, 2. Various equipment, facilities, and workrooms are integrated on the steel platform system 4.

The steel platform system 4 consists of at least three radial and at least two circumferential space trusses, offering high overall load-bearing capacity and rigidity to serve as a construction loading platform for the reactor building; meanwhile, heavy-duty equipment such as the cranes, the concrete distributor , and the elevators can be directly arranged on the steel platform system 4 and synchronously climb with the platform alongside the formwork, effectively enhancing vertical transport efficiency while eliminating the need for separate jacking and repositioning of large construction equipment.

Structural members for annulus construction are first hoisted by an external tower crane to a completed annulus platform located between the inner shell 2 and the outer shell 1, and then positioned and installed in place by the polar crane 7.2. Once installed, the annulus platform can also serve as a construction material loading platform for the construction of an upper-level annulus.

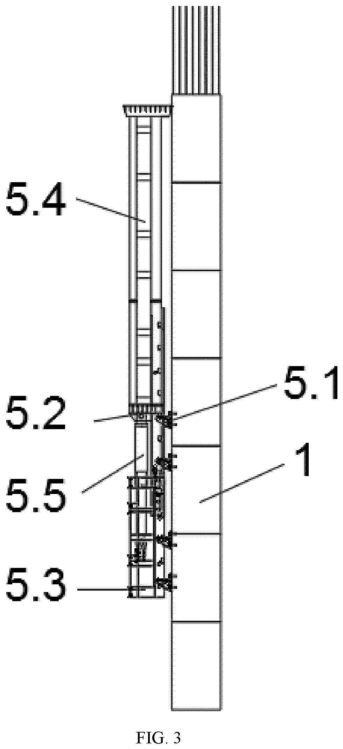

Preferably, referring to FIG. 3, an embodiment of the present invention provides a specific structure of the support and jacking system 5, including a load-bearing member 5.1, a supporting member 5.2, a climbing member 5.3, a steel column 5.4, and a hydraulic assembly 5.5, where the load-bearing member 5.1 is detachably installed on the side surface of the nuclear island reactor building; a top end of the steel column 5.4 is fixedly connected to the steel platform system 4, while a bottom end thereof is fixedly connected to the supporting member 5.2; and a bottom of the hydraulic assembly 5.5 is fixed inside the climbing member 5.3, while a top thereof is connected to the supporting member 5.2 to support climbing of the supporting member.

Specifically, the supporting member 5.2, the climbing member 5.3, and the load-bearing member 5.1 are detachably connected via hooks or pins. For example, the supporting member 5.2 and the climbing member 5.3 are provided with corresponding hooks, while a plurality of hook seats (which may be vertically arranged in two rows) are vertically arranged on the load-bearing member 5.1 to engage with the hooks. Or, the hook seats may be arranged on the supporting member while the hooks are arranged on the load-bearing member. Optionally, the load-bearing member 5.1 may be attached to the outer side of the inner shell 2, the inner side of the outer shell 1, or the outer side of the outer shell 1, transferring all platform loads to the shells of the reactor building while driving the platform to climb or descend as a whole. The climbing member 5.3 may employ a frame structure with a plurality of hooks installed on both side surfaces of the frame structure.

The working process of the support and jacking system 5 is as follows:
1: connect the climbing member 5.3 to the load-bearing member 5.1 while disconnecting the supporting member 5.2 from the load-bearing member 5.1;
2: drive the supporting member 5.2 by extending a hydraulic cylinder of the hydraulic assembly 5.5 to cause the steel column 5.4, the steel platform system 4, the hanger and formwork system 6, and other auxiliary construction equipment and facilities to climb as a whole;
3: after the integration platform climbs in place, connect the supporting member 5.2 to the load-bearing member 5.1 at a corresponding position;
4: disconnect the climbing member 5.3 from the load-bearing member 5.1 and retract the hydraulic cylinder of the hydraulic assembly 5.5 to drive the climbing member 5.3 to climb upward; and
5: after the climbing member 5.3 climbs in place, connect the climbing member 5.3 to the load-bearing member 5.1 at a corresponding position.

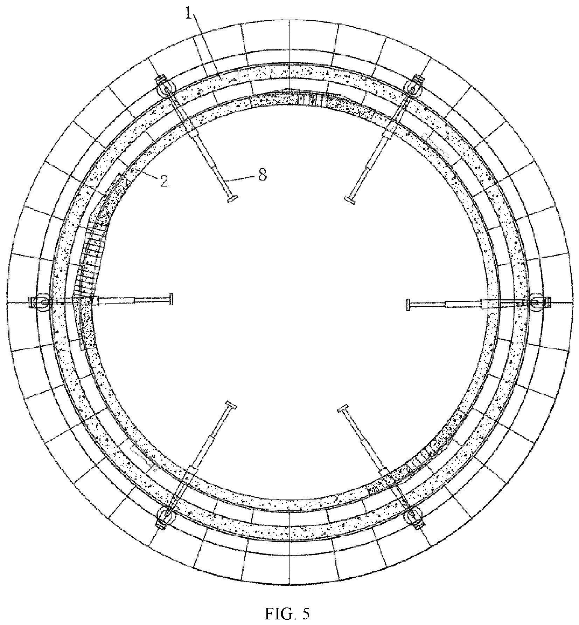

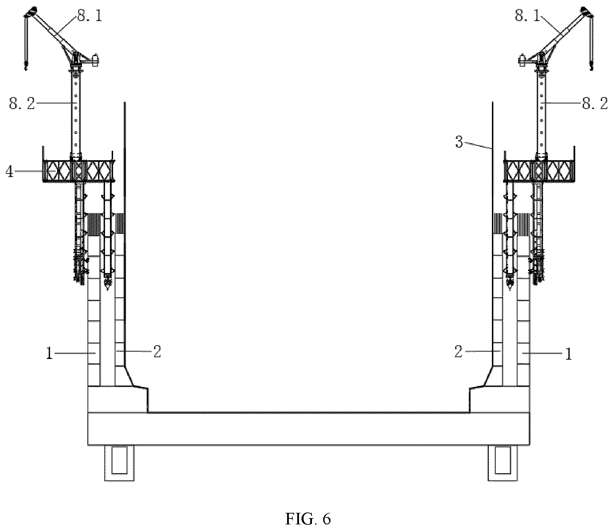

Furthermore, referring to FIGs. 5 & 6, a crane 8 (which may be arranged in a plurality) is fixed on the steel platform system 4, with a mast 8.2 of the crane 8 fixedly connected to a steel platform, and the crane has a telescopic boom 8.1. The boom 8.1 can be at different elevation angles with the mast 8.2. The crane 8 is configured to transfer and hoist the inner shell 2, the outer shell 1, the steel liner 3, and even internal structural materials.

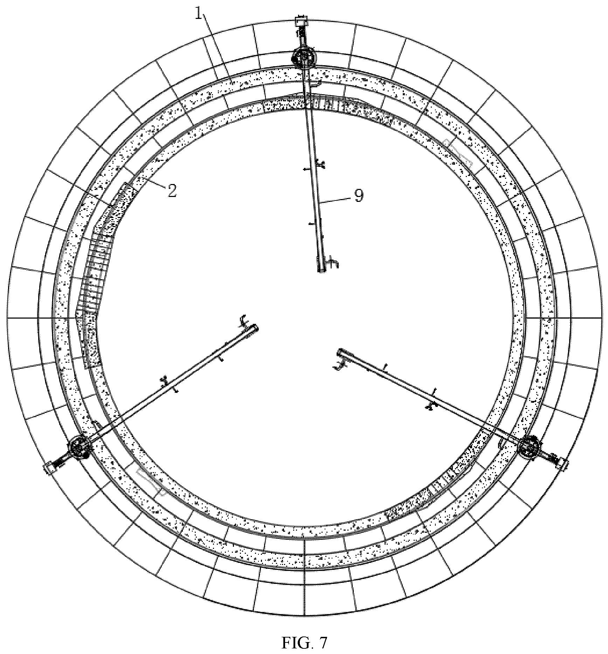

Furthermore, referring to FIG. 7, the concrete distributor 9 is fixed on the steel platform system 4. During the construction phase of the dome of the inner shell 2, the concrete distributor 9 can extend to the plane center of the reactor building, thereby completing concrete pouring of the dome of the inner shell 2.

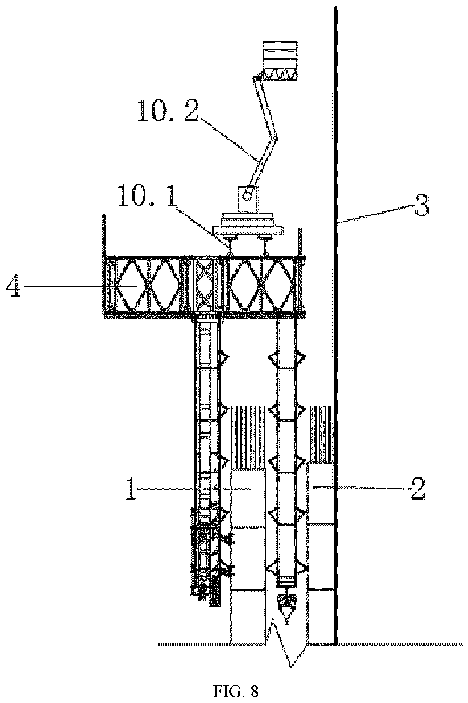

Furthermore, referring to FIG. 8, a circular work track 10.1 is installed above the steel platform system 4, and an aerial work platform 10.2 is slidably installed on the circular work track 10.1, where the aerial work platform 10.2 is height-adjustable. Since the aerial work platform 10.2 is height-adjustable, construction activities such as welding of the steel liner 3 and installation of penetrating members can be performed at different heights.

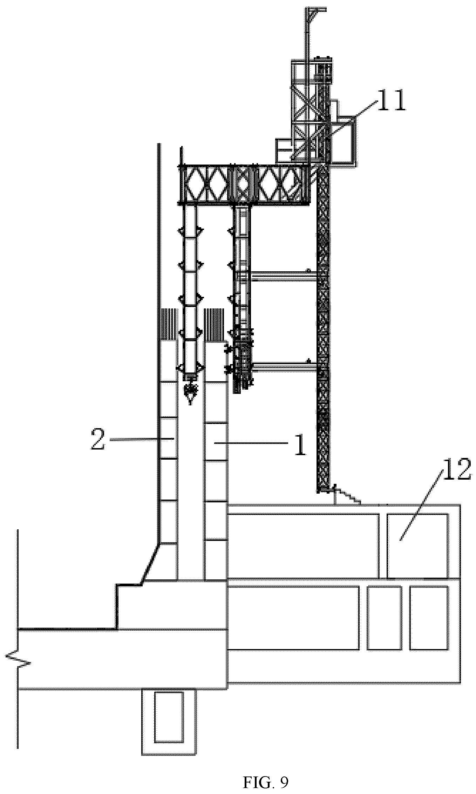

Furthermore, referring to FIG. 9, the steel platform system 4 is connected to a plurality of top-mounted telescopic downward-extending transport devices 11 (which may employ a structure in the prior art). The top-mounted telescopic downward-extending transport devices 11 are fixedly connected to the steel platform system 4 but are not connected to the surrounding building 12. As the steel platform system 4 is jacked up, the top-mounted telescopic downward-extending transport devices 11 ascend accordingly, and then additional standard sections of elevators are installed at the top and extended downward. By arranging the top-mounted telescopic downward-extending transport devices 11, construction personnel can safely access the integration platform from the top of the surrounding building 12.

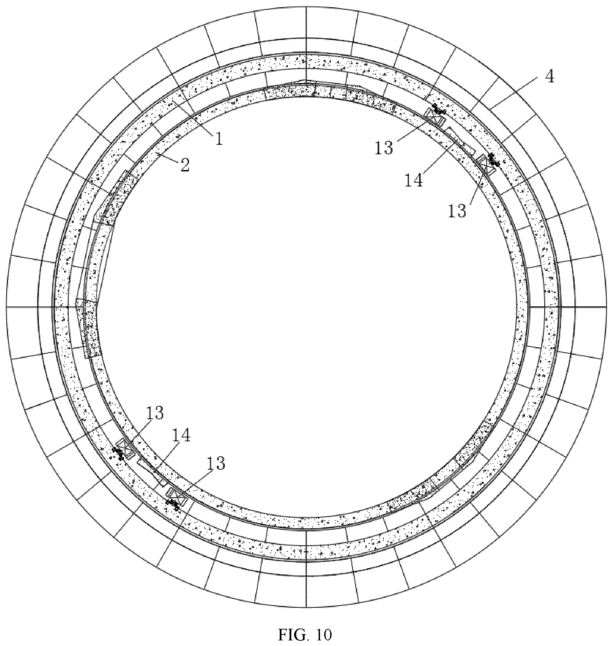

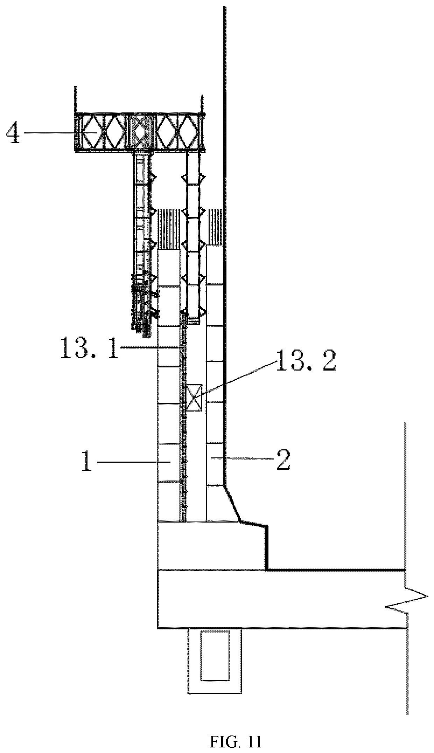

Furthermore, referring to FIGs. 10 & 11, the nuclear island reactor building construction equipment integration platform further includes construction elevators 13 located on both sides of a buttress column 14, where the construction elevators 13 each include standard sections 13.1 thereof detachably installed on the side surface of the nuclear island reactor building and a cage 13.2 that is installed on and can move vertically relative to the standard sections 13.1.

By arranging the construction elevators 13, construction personnel can ascend from a position between the inner and outer shells to the hanger and then access the steel platform for performing construction work. The cage 13.2 can transport construction personnel and equipment for tensioning prestressing tendons along the standard sections 13.1 of the construction elevators upward/downward to designated positions to perform horizontal prestressing tensioning operations on a side surface of the buttress column 14.

The working process of the construction elevators 13 is as follows:
1: disconnect the standard sections 13.1 of the construction elevators from the hanger and formwork system 6;
2: lift the hanger and formwork system 6 as the integration platform is jacked up;
3: hoist and install additional standard sections 13.1 of the construction elevators; and
4: reconnect the standard sections 13.1 of the construction elevators to the hanger and formwork system 6, and control the cage 13.2 to move to the bottom of the hanger and formwork system 6.

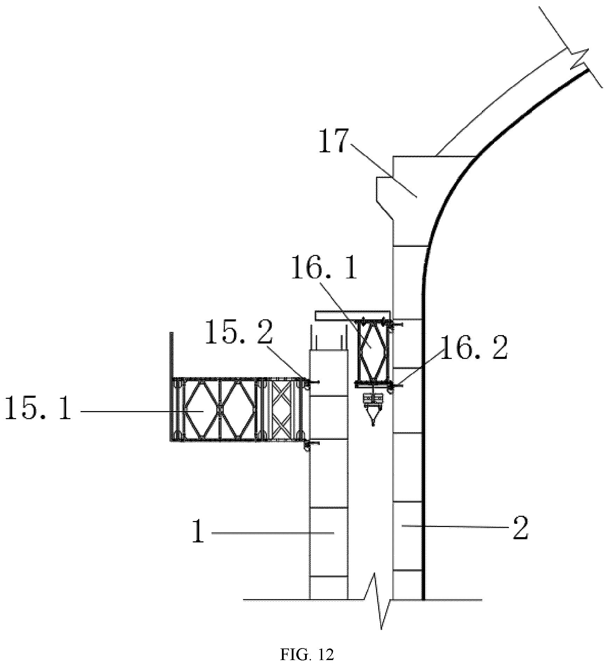

Furthermore, referring to FIG. 12, the steel platform system 4 includes detachably connected outer and inner cantilever platforms 15.1, 16.1; after disconnecting a linking member between the outer and inner cantilever platforms 15.1, 16.1, the outer cantilever platform 15.1 is attached to the outer side of the outer shell 1 of the nuclear island reactor building through an outer cantilever platform support point 15.2, while the inner cantilever platform 16.1 is attached to the outer side of the inner shell 2 of the nuclear island reactor building through an inner cantilever platform support point 16.2; and a top of the inner cantilever platform 16.1 is provided with an operation frame and prestressing tensioning equipment. The outer and inner cantilever platforms 15.1, 16.1 are both steel truss structures.

The outer cantilever platform 15.1 is attached to the outer side of the outer shell 1 and serves as a support structure for constructing the ASP water tank floor, while the inner cantilever platform 16.1 is attached to the outer side of the inner shell 2 and serves as both a working platform for ring beam construction and tensioning of Gamma prestressing tendons and a rainproof platform.

The dismantling and modification process of the integration platform is as follows:
1: install the outer and inner cantilever platform support points 15.2, 16.2 on the outer sides of the outer and inner shells 1, 2 respectively;
2: remove the integration equipment and workrooms at the top of the steel platform system 4;
3: connect the steel platform system 4 to the inner cantilever platform support point 16.2;
4: remove part of the steel trusses of the steel platform system 4 in the upper part of the outer shell 1 to split the steel platform system 4 into two parts, and attach the inner cantilever platform 16.1 to the outer side of the inner shell 2 via the inner cantilever platform support point 16.2 and the outer cantilever platform 15.1 to the outer side of the outer shell 1 via the support and jacking system 5;
5: lower the outer cantilever platform 15.1 using the support and jacking system 5 until it reaches the height of the outer cantilever platform support point 15.2;
6: connect the outer cantilever platform 15.1 to the outer cantilever platform support point 15.2 to complete the support transfer of the outer cantilever platform 15.1; and
7: remove the support and jacking system 5.

The nuclear island reactor building construction equipment integration platform provided by the present invention has the following beneficial effects:
1: the integration platform is supported on the walls of the inner and outer shells 2, 1 and achieves multi-level flow construction of the inner and outer shells 2, 1 through multi-level hangers, thereby avoiding interference with existing flipping formwork frames and enabling synchronous construction of the inner and outer shells 2, 1 at the same elevation; in addition, the construction of the surrounding building 12 is decoupled from that of the outer shell 1, solving the problem of the total construction period being restricted by the "step-by-step" construction process for the inner shell 2, outer shell 1, and surrounding building 12 in existing nuclear island reactor building construction;
2: the steel platform system 4 consists of a plurality of radial and circumferential space trusses, offering high overall load-bearing capacity and rigidity to serve as a construction loading platform for the reactor building; meanwhile, heavy-duty equipment such as the cranes 8, the concrete distributor 9, and the elevators can be directly arranged on the steel platform and synchronously climb with the platform alongside the formwork, effectively enhancing vertical transport efficiency while eliminating the need for separate jacking and repositioning of large construction equipment; and
3: the steel platform system 4 can be adapted through modifications to accommodate multi-phase construction of the reactor building, reducing the need for additional structural support measures and thereby saving both construction time and costs.

The present invention further provides a climbing method for the nuclear island reactor building construction equipment integration platform.

In a preferred embodiment, the climbing method for the nuclear island reactor building construction equipment integration platform described above includes the following steps:
S10: connecting the climbing member 5.3 to the load-bearing member 5.1 while disconnecting the supporting member 5.2 from the load-bearing member 5.1;
S20: driving the supporting member 5.2 by extending a hydraulic cylinder of the hydraulic assembly 5.5 to cause the steel column 5.4, the steel platform system 4, the hanger and formwork system 6, and other auxiliary construction equipment and facilities to climb as a whole;
S30: after the integration platform climbs in place, connecting the supporting member 5.2 to the load-bearing member 5.1 at a corresponding position;
S40: disconnecting the climbing member 5.3 from the load-bearing member 5.1 and retracting the hydraulic cylinder of the hydraulic assembly 5.5 to drive the climbing member 5.3 to climb upward; and
S50: after the climbing member 5.3 climbs in place, connecting the climbing member 5.3 to the load-bearing member 5.1 at a corresponding position.

The above-described embodiments are only preferred embodiments of the present invention and do not limit the patent protection scope of the present invention. Any equivalent structural transformations based on the content of the specification and accompanying drawings of the present invention, or direct or indirect application of the above-described embodiments in other related technical fields are all included in the patent protection scope of the present invention for the same reason.

## Claims

1. A nuclear island reactor building construction equipment integration platform, comprising a steel platform system, a support and jacking system, a hanger and formwork system, and construction integration equipment, wherein
the support and jacking system is installed on a side surface of a nuclear island reactor building and located below the steel platform system to support climbing of the steel platform system; the hanger and formwork system is installed below the steel platform system;
the steel platform system comprises circumferential steel trusses, primary radial steel trusses, and secondary radial steel trusses, wherein two ends of each of the primary radial steel trusses are connected to innermost and outermost ones of the circumferential steel trusses respectively, and the secondary radial steel trusses are disconnected above an outer shell of the nuclear island reactor building to facilitate downward hoisting of construction materials for the outer shell; and
the construction integration equipment comprises a telescopic boom crane fixed on the steel platform system, a concrete distributor, an aerial work platform, a circular runway installed at a bottom of the hanger and formwork system, a polar crane slidably connected to the circular runway, and a plurality of top-mounted telescopic downward-extending transport devices connected to the steel platform system.

2. The nuclear island reactor building construction equipment integration platform of claim 1, wherein the support and jacking system comprises a load-bearing member, a supporting member, a climbing member, a steel column, and a hydraulic assembly, wherein the load-bearing member is detachably installed on the side surface of the nuclear island reactor building; a top end of the steel column is fixedly connected to the steel platform system, while a bottom end thereof is fixedly connected to the supporting member; and a bottom of the hydraulic assembly is fixed inside the climbing member, while a top thereof is connected to the supporting member to support climbing of the supporting member.

3. The nuclear island reactor building construction equipment integration platform of claim 2, wherein the supporting member, the climbing member, and the load-bearing member are detachably connected via hooks or pins.

4. The nuclear island reactor building construction equipment integration platform of claim 2, wherein the telescopic boom crane is fixed on the steel platform system, with a mast of the crane fixedly connected to a steel platform

5. The nuclear island reactor building construction equipment integration platform of claim 2, wherein the concrete distributor is fixed on the steel platform system.

6. The nuclear island reactor building construction equipment integration platform of claim 2, wherein a circular work track is installed above the steel platform system, and the aerial work platform is height-adjustable and slidably installed on the circular work track.

7. The nuclear island reactor building construction equipment integration platform of claim 2, wherein the steel platform system is connected to the plurality of top-mounted telescopic downward-extending transport devices.

8. The nuclear island reactor building construction equipment integration platform of claim 2, further comprising construction elevators located on both sides of a buttress column, wherein the construction elevators each comprise standard sections thereof detachably installed on the side surface of the nuclear island reactor building and a cage that is installed on and can move vertically relative to the standard sections.

9. The nuclear island reactor building construction equipment integration platform of any one of claims 2-8, wherein the steel platform system comprises detachably connected outer and inner cantilever platforms; after disconnecting a linking member between the outer and inner cantilever platforms, the outer cantilever platform is attached to an outer side of the outer shell of the nuclear island reactor building through an outer cantilever platform support point, while the inner cantilever platform is attached to an outer side of an inner shell of the nuclear island reactor building through an inner cantilever platform support point; and a top of the inner cantilever platform is provided with an operation frame and prestressing tensioning equipment.

10. A climbing method for the nuclear island reactor building construction equipment integration platform of any one of claims 2-9, comprising the following steps:
connecting the climbing member to the load-bearing member while disconnecting the supporting member from the load-bearing member;
driving the supporting member by extending a hydraulic cylinder of the hydraulic assembly to cause the steel column, the steel platform system, the hanger and formwork system, and other auxiliary construction equipment and facilities to climb as a whole;
after the integration platform climbs in place, connecting the supporting member to the load-bearing member at a corresponding position;
disconnecting the climbing member from the load-bearing member and retracting the hydraulic cylinder of the hydraulic assembly to drive the climbing member to climb upward; and
after the climbing member climbs in place, connecting the climbing member to the load-bearing member at a corresponding position.
